(19) Europäisches Patentamt
European Patent Office
Office européen des brevets

(11) Veröffentlichungsnummer: **0 584 445 B1**

(12) **EUROPÄISCHE PATENTSCHRIFT**

(45) Veröffentlichungstag der Patentschrift: **13.09.95**

(51) Int. Cl.6: **B60R 13/02**, B32B 5/26, D04H 1/42

(21) Anmeldenummer: **93103340.1**

(22) Anmeldetag: **03.03.93**

(54) **Innenausstattungsteil für Fahrzeuge.**

(30) Priorität: **26.08.92 DE 4228304**

(43) Veröffentlichungstag der Anmeldung:
**02.03.94 Patentblatt 94/09**

(45) Bekanntmachung des Hinweises auf die
Patenterteilung:
**13.09.95 Patentblatt 95/37**

(84) Benannte Vertragsstaaten:
**AT DE ES FR GB IT NL SE**

(56) Entgegenhaltungen:
EP-A- 0 317 646      EP-A- 0 377 212
EP-A- 0 394 954      EP-A- 0 469 309
DE-A- 2 738 304      DE-A- 2 937 399
DE-A- 3 314 458      DE-A- 3 629 230

(73) Patentinhaber: **Firma Carl Freudenberg**
**Höhnerweg 2-4**
**D-69469 Weinheim (DE)**

(72) Erfinder: **Föttinger, Walter, Dr.**
**Leberstrasse 77**
**W-6940 Weinheim (DE)**
Erfinder: **Grimm, Hansjörg**
**Karlsruherstrasse 20**
**W-6940 Weinheim (DE)**
Erfinder: **Schaut, Gerhard, Dr.**
**Brunhildstrasse 9**
**W-6944 Hemsbach (DE)**

**Beschreibung**

Die Erfindung befaßt sich mit einem Innenausstattungsteil für Fahrzeuge, insbesondere einem Fahrzeughimmel-Trägerteil.

Autohimmel-Trägerteile sind die tragenden, nicht sichtseitigen Bestandteile von Autohimmeln.

Die Problematik bei diesen Ausstattungsteilen, insbesondere bei freihängenden Fahrzeughimmeln, besteht in der Anforderung, gegen Feuchtigkeit resistent zu sein und insbesondere hohe Wärmewerte, ohne durchzuhängen, zu überstehen: Bei Sonneneinstrahlung, oder auch während des Lackierens im Herstellerwerk, sind die außenliegenden Oberflächen solcher Bauteile Temperaturen bis zu 110°C ausgesetzt. Die ist bei einschichtigen Varianten ebenso zu beachten wie bei dreischichtigen Faservliesstoff-Laminaten, deren beide äußeren Schichten resistent gegen solche Temperaturen ausgestaltet werden müssen.

Ausstattungsteile aus Faservliesstoff, welche die oben genannten Anforderungen erfüllen, enthalten mindestens 50 Gew.-% oder bestehen aus Polyesterfasern und erreichen ihre Wärmestandfestigkeit durch eine Imprägnierung mit wärmehärtendem Kunstharz-Bindemittel. Sowohl ein- wie auch dreischichtige Ausführungen werden unter Druck- und Wärmeeinwirkung in die vorgesehene Form gepreßt und (gegebenenfalls miteinander) verfestigt. Beschrieben ist dies beispielsweise in DE 29 37 399 A1, wo das Kunstharz-Bindemittel vorzugsweise in einer Menge von 400 g pro Quadratmeter Grundfläche und Millimeter Enddicke des Fertigerzeugnisses vorliegt. Dabei wird von einer vorzugsweisen Enddicke des Fertigerzeugnisses zwischen 1 und 2,5 mm ausgegangen.

Die DE 36 29 230 A1 beschreibt zusätzlich die Beimischung von Glasfasern bis zu einer Menge von 100 Gew.-%, um die Wärmestandfestigkeit noch weiter zu erhöhen.

Solche bekannten Ausstattungsteile sind nicht recyclefähig wegen des Kunstharz- und/oder Glasfaser-Gehaltes. Insbesondere ist es nicht möglich, den Grundstoff, Polyesterfasern, entweder zu minderwertigem, wiederverwendbarem Polyestermaterial aufzuschmelzen und zu regranulieren oder gleichwertigen Polyester über Alkoholyse regenerativ zu gewinnen, weil in jedem Falle gerade die die Wärmestandfestigkeit ausmachenden, genannten zusätzlichen Werkstoffe nicht von den Polyesteranteilen vor dem Regenerieren befriedigend abtrennbar sind.

Ferner ergibt das gebräuchlicherweise als Polyesterfasermaterial verwendete Polyethylenterephthalat Flächengebilde, deren Biegesteifigkeit bei realistisch hohen Temperaturen von 90°C bereits um 90% des Ausgangswertes bei Raumtemperatur absinkt.

Ausgehend von DE 29 37 399 A1 hat die Erfindung zur Aufgabe, ein mittels einfacher, konventioneller Verfahrensschritte herstellbares Ausstattungsteil für Fahrzeuge, insbesondere ein Fahrzeughimmel-Trägerteil, anzugeben, bei dem zumindest die der Hitze ausgesetzten Faserschichten ausschließlich Polyesterfasern und weder eine Bindemittelimprägnierung noch Bindefasern oder Glasfasern enthalten. Dabei sollen Wärmestandfestigkeiten erzielt werden, welche den Anforderungen der Fahrzeugindustrie genügen, was einem Wert des Elastitzitätsmoduls bei Biegung gemäß der Norm EN 63, bei einer Prüftemperatur von 90°C, von mehr als 30 N/mm$^2$ entspricht, bei einer Dicke des Werkstoffs von 3 mm und einem Flächengewicht von 1000 g/m$^2$. Der drastische Verlust der Biegesteifigkeit bei hohen Temperaturen, wie er bei der Verwendung von Polyethylenterephthalat-Fasern beobachtet wird, soll deutlich verringert sein.

Diese Aufgabe wird mit einem 1 bis 6 mm dicken Innenausstattungsteil für Fahrzeuge, insbesondere mit einem AutohimmelTrägerteil, aus Polyesterfasern gelöst, wobei das Ausstattungsteil ein- oder dreischichtig aufgebaut ist. Durch Druck- und Wärmeeinwirkung werden alle Schichten in die vorgesehene Form gepreßt und verfestigt. Gegenstand der Erfindung ist dabei, daß zumindest die der Wärmeeinwirkung bei bestimmungsgemäßem Einsatz ausgesetzten Schichten die kennzeichnenden Merkmale des Anspruchs 1 aufweisen. Vorteilhafte Varianten sind in den Unteransprüchen aufgezeigt. Erfindungsgemäß bestehen alle Schichten des Ausstattungsteils aus Polyesterfasern mit einem Titer von 1,5 bis 30 dtex. Dies ist wesentlich, um die Verbindung der Fasern beim Herstellungsprozeß, welcher ohne Verwendung zusätzlichen Bindemittels verläuft, zu erzielen und anschließend die gewünschte Stabilität zu gewährleisten.

Die bezüglich der Wärmeeinwirkung kritischen Faserschichten, also bei der einschichtigen Version diese Schicht und bei der dreischichtigen Version die beiden Außenschichten, enthalten erfindungsgemäß Polybutylenterephthalatfasern, wobei, bezogen auf das jeweilige Gesamtgewicht, die einschichtige Version aus 80 bis 100 Gew.-% Polybutylenterephthalatfasern und maximal 20 Gew.-%, in homogener Verteilung, Polyesterfasern mit einem Schmelzpunkt über 228°C besteht und in der dreischichtigen Version die der Hitzeeinwirkung ausgesetzten beiden Außenschichten jeweils aus 25 bis 100 Gew.-% Polybutylenterephthalatfasern und aus maximal 75 Gew.-%, in homogener Verteilung, Polyester-Endlosfasern mit einem Schmelzpunkt über 228°C bestehen.

Die Summe der jeweiligen beiden Faser-Gewichtsanteile beträgt stets 100%; d.h. es sind keinerlei weitere Bindemittel- oder Verfestigungszusätze vorhanden. Das Ausstattungsteil besteht ausschließlich aus Polyester.

Bei einer dreischichtigen Ausführung des Ausstattungsteils kann die mittlere, nicht so sehr der Wärmeeinwirkung ausgesetzte Schicht aus einer Mischung etwa gleicher Anteile von Polyethylenterephthalat- und Bikomponentenfasern (mit Polyethylenterephthalat und niedriger schmelzendem Copolyester) bestehen. Fasertiter und Stapellänge sind wiederum gleich denjenigen der Fasern in den übrigen Schichten.

In einer bevorzugten Variante weist diese Innenschicht eine Dichte auf, die 8 bis 40% derjenigen der Außenschicht beträgt.

Dieser Parameter erhöht die Biegesteifigkeit des Verbundes; geringere Dichten verhindern die Übertragung der Verformungskräfte von einer Außenschicht zur anderen, höhere Werte als angegeben wirken sich nachteilig auf das Gesamtgewicht aus, ohne daß die Biegesteifigkeit verbessert würde.

Da diese mittlere Schicht von den beiden äußeren Faserschichten gestützt ist, bleibt ihre Wärmestandfestigkeit ohne Bedeutung für die Qualität des Ausstattungsteils; diese wird ausschließlich durch die Polybutylenterephthalat-Fasern enthaltenden Schichten geprägt.

Es war nicht vorherzusehen, daß der beanspruchte Aufbau den Einsatz zusätzlicher, bindender Bestandteile nicht erfordern würde und dennoch ein unter Druck und Hitze form- und verfestigbares Fasergefüge vorläge. Der erfindungsgemäße Gegenstand kann zudem in seinem Gewicht leichter gefertigt werden, als es der Fall wäre, wenn zusätzlich beträchtliche Mengen an Bindemittel, Bindefasern und/oder wärmestandfähigen Harzen oder Fasern zugemischt werden müßten.

Überraschenderweise weist das erfindungsgemäße Innenausstattungsteil eine höhere Wärmestandfestigkeit auf als ein ausschließlich aus Polyethylenterephthalat-Fasern aufgebautes. Dies war deshalb nicht zu erwarten, weil der Glasumwandlungspunkt, d.h. die Temperatur, bei der der Werkstoff zu erweichen beginnt, für Polybutylenterephthalat bei etwa 39°C, derjenige für Polyethylenterephthalat jedoch bei etwa 69°C liegt. Die beweist, daß eine Vorhersage dieser Festigkeit aufgrund bekannter thermischer Werte nicht möglich war.

In der vorliegenden Erfindung sollen unter "Polybutylenterephthalatfasern" auch Kern-/Mantel-Fasern verstanden werden, deren Kern aus einem Polyester besteht, von dem nur gefordert werden muß, daß sein Schmelzbereich über demjenigen des Polybutylenterephthalats liegt, welches den Mantel der Faser bildet. Der Einsatz dieser Mehrkomponentenfasern bei der Herstellung erfindungsgemäßer Ausstattungsteile gewährleistet immer noch Restwerte für die Biegesteifigkeit bei 90°C von 35 bis 40%. Diese Werte reichen in den meisten Fällen aus, um eine störende Durchbiegung bei Hitzeeinwirkung zu verhindern. Die Bauteile können sehr leicht ausgestaltet werden, und der Einsatz dieser Bikomponentenfasern ist kostengünstig.

Die Herstellung des Ausstattungsteils bedient sich im wesentlichen bekannter Verfahrensschritte und -abfolgen.

Es folgt eine Behandlung im Vorwärmofen, wo beheizte Metallplatten, welche eine Polytetrafluorethylen-Auflage tragen, auf die Bindefasern einwirken. Die Temperatur der Platten soll dabei 1 bis 15°C über dem Schmelzpunkt des Polybutylenterephthalats (228°C) liegen. Verweilzeiten von 1 bis 5 min sind dabei zweckmäßig.

In einer weiteren Stufe wird der Vliesstoff in das dem fertigen Ausstattungsteil entsprechende Formwerkzeug verbracht und einem Formdruck von $10^5$ bis $2 \times 10^6$ Pa ausgesetzt.

Die Temperatur des Formwerkzeugs beträgt zweckmäßig mindestens 10°C unter der Schmelztemperatur des Polybutylenterephthalats.

Die Verweildauer beträgt 0,2 bis 2 min, wonach das fertige Ausstattungsteil der Form entnommen werden kann.

Es war nicht zu erwarten, daß sich mit der erfindungsgemäßen Verwendung von Polybutylenterephthalat-Fasern, ohne jeglichen Zusatz von niedriger schmelzenden Bindefasern, anderen Bindemitteln, Kunstharzen oder Glasfasern, steife und gleichzeitig elastische Formteile würden herstellen lassen, die bei 90°C noch eine Biegesteifigkeit von bis zu 33% des Ausgangswertes aufweisen würden. Offenbar bewirkt allein das Polybutylenterephthalat eine Verfestigung der Fasern bis ins Innere der jeweiligen Schicht, wenn die beanspruchten Titer und Stapellängen der Fasern eingehalten werden.

Im folgenden werden die Vorteile der Erfindung beispielhaft näher erläutert.

Beispiel 1:

Es wurde ein einschichtiger Vliesstoff aus 100% handelsüblichen Polybutylenterephthalat-Fasern mit einem Titer von 1,7 dtex und 38 mm Schnittlänge hergestellt durch Krempeln und konventionelles Vernadeln. Das Flächengewicht des so erhaltenen Nadelvliesstoffs betrug 800 g/m², seine Dicke 22 mm, die Zahl der Nadeleinstiche war 18/cm².

Das Material wurde anschließend zwischen zwei beheizten, mit Polytetrafluorethylen beschichteten Platten vorgewärmt und vorverdichtet. Die obere Platte hatte eine Temperatur von 235°C, die untere von 230°C, der Abstand beider Platten betrug 7 mm.

Das den vorgenannten Bedingungen während einer Zeit von 2,2 min ausgesetzte Material wurde sofort anschließend zwischen zwei Platten von Raumtemperatur auf eine Dicke von 3 mm gepreßt bei einer Preßzeit von 1 min. Das fertig verpreßte Material wurde einem Biegesteifigkeits-Test nach EN 63 bei 23°C und bei 90°C unterworfen. Dabei betrug der Restwert der Biegesteifigkeit bei 90°C immer noch 33%. Dieser Wert reicht aus, um einen Autohimmel bei entsprechender Temperaturbelastung sich nicht wesentlich durchbiegen zu lassen. Dazu trägt auch die Leichtigkeit des Bauteils bei.

Beispiel 2:

Ein dreischichtiger Vliesstoffverbund wurde hergestellt aus Spinnvliesstoffen. Dabei bestanden die Deckschichten jeweils aus 70 Gew.-% Polyethylenterephthalat- und 30 Gew.-% Polybutylenterephthalat-Fasern mit einem Titer von jeweils 7 dtex. Die Dicke der Außenschichten betrug jeweils 0,7 mm, ihr Flächengewicht 250 g/m².

Die Mittelschicht bestand aus 500 g/m² schwerem, beidseitig vernadeltem Spinnvliesstoff mit einer Dicke von 3 mm. Er wurde aus dem gleichen Fasermaterial in gleichen Anteilen wie in den Außenschichten gebildet. Der Fasertiter betrug 5,6 dtex.

Die Verbund wurde anschließend zwischen zwei beheizten, mit Polyethylenterephthalat beschichteten Platten, deren Temperatur jeweils 255°C betrug, auf 4 mm vorverdichtet. Das den vorgenannten Bedingungen während einer Zeit von 2,5 min ausgesetzte Material wurde sofort anschließend zwischen zwei Platten bei Raumtemperatur auf eine Dicke von 3 mm während einer Zeit von einer Minute gepreßt.

Das fertige Material wurde einem Biegesteifigkeitstest nach der Norm EN-63 bei 23°C und bei 90°C unterworfen. Die Testwerte sind der Tabelle entnehmbar.

Beispiel 3:

Bei dieser, ebenfalls dreischichtigen, Variante wurden Außenschichten gemäß Beispiel 2 verwendet, während für die Mittelschicht ein thermisch vorverfestigter Nadelvliesstoff aus Polyethylenterephthalat-Fasern zum Einsatz kam. Dieser Nadelvliesstoff, welcher eine Dicke von 18 mm und ein Gewicht von 500 g/m² besaß, bestand aus 100 Gew.-% Bikomponentenfasern mit einem Titer von 6 dtex und einer Stapellänge von 60 mm. Der Kern der Bikomponentenfasern bestand aus verstreckten Polyethylenterephthalat mit einer Schmelztemperatur von 260°C, der Mantel aus einem Copolyester mit einer Schmelztemperatur von 200°C.

Der dreischichtige Verbund wurde zwischen zwei beheizten, mit Polytetrafluorethylen beschichteten Platten, deren Temperaturen 255°C betrugen, innerhalb 0,5 min auf 5 mm vorverdichtet.

Anschließend wurde dieses Material zwischen zwei Platten von Raumtemperatur auf eine Dicke von 3 mm bei einer Preßzeit von einer Minute und einem Preßdruck von 500000 Pa gepreßt.

Die Biegesteifigkeit ist in der Tabelle aufgeführt.

Beispiel 4:

Es wurde ein einschichtiger Vliesstoff aus 100% Kern-/Mantel-Fasern hergestellt, wobei der Kern aus einem höher als das Polybutylenterephthalat des Mantels schmelzenden Polyester besteht. Diese Faser ist handelsüblich und besitzt einen Titer von 5,5 dtex bei 55 mm Schnittlänge. Die Herstellung erfolgte durch Krempeln und konventionelles Vernadeln.

Das Flächengewicht des so erhaltenen Nadelvliesstoffs betrug 800 g/m², seine Dicke 22 mm und die Zahl der Nadeleinstiche war 18/cm.

Sodann wurde dieser Vliesstoff im Bandtrockner bei 235°C und 6 min vorgetempert.

Das Material wurde anschließend zwischen zwei beheizten, mit PTFE beschichteten Platten vorgewärmt und vorverdichtet. Die Temperatur der beiden Platten betrug 255°C, der Abstand der Platten war auf 8 mm kalibriert.

Das den vorgenannten Bedingungen während einer Zeit von 2,4 min ausgesetzte Material wurde sofort anschließend zwischen zwei Platten von Raumtemperatur auf eine Dicke von 4 mm gepreßt bei einer Preßzeit von 1 min. Das fertig verpreßte Material wurde einem Biegesteifigkeits-Test nach EN 63 bei 23°C und bei 90°C unterworfen. Dabei betrug der Restwert der Biegesteifigkeit bei 90° immer noch 38,8%. Dieser Wert reicht aus, um einen Autohimmel bei entsprechender Temperaturbelastung sich nicht wesent-

4

lich durchbiegen zu lassen. Dazu trägt auch die Leichtigkeit des Bauteils bei.

Vergleichsbeispiel

Zum Vergleich wurde ein Nadelvliesstoff aus herkömmlichen Polyethylenterephthalat-Fasern gemäß folgender Beschreibung hergestellt:

Ein dreischichtiges Vliestoff-Laminat ohne Bindemittel- und Kunstharzzusatz wurde analog Beispiel 2 durch Krempeln, Nadeln und thermisches Vorverfestigen hergestellt, im Vorwärmofen behandelt während 3 min bei einer Umlufttemperatur von 170°C und anschließend im Formwerkzeug bei 5 x 10⁵ Pa während einer Dauer von 1,5 min verformt. Die Temperatur betrug dabei 120°C.

Die Außenschichten bestanden zu jeweils 100% aus 6 dtex-Bikomponentenfasern mit einer Stapellänge von 60 mm und einem Kern aus verstrecktem Polyethylenterephthalat, Schmelztemperatur 260°C, sowie einem Mantel aus Copolyester, Schmelzpunkt 200°C. Die Fasern wurden im Handel erworben.

Die Mittelschicht wurde hergestellt aus 80 Gew.-% der oben genannten Kern-Mantel-Fasern sowie aus 10 Gew.-% einfachen, verstreckten Polyethylenterephthalat-Fasern mit einem Titer von 17 dtex und aus 10 Gew.-% verstreckten Polyethylenterephthalat-Fasern mit einem Titer von 6 dtex.

Anschließend wurde von dem Material die Biegesteifigkeit nach EN 63 bei 23°C und bei 90°C bestimmt.

Wie der Vergleich zeigte, ging bei dem Material aus Polyethylenterephthalat-Fasern die Biegesteifigkeit bei 90°C auf 10 % des Ausgangswertes bei Raumtemperatur zurück. Ein solcher Wert ist nicht mehr tragbar, ein Autohimmel würde unter diesen Bedingungen im Fahrzeug durchhängen und wäre qualitativ unbrauchbar.

Die folgende Tabelle faßt die Ergebnisse aus den Beispielen nochmals zusammen:

# Elastizitätsmodul bei Biegung(N/mm²) nach EN 63

## Flächengewicht 1000g/m²,Dicke 3mm

| Beispiel | | 23°C | 90°C | | %–Restwert |
|---|---|---|---|---|---|
| 1 | | 130 | 43 | | 33 |
| 2 | | 363 | 94 | | 26 |
| 3 | | 177 | 62 | | 35 |
| 4 | | 322 | 125 | | 39 |
| Vergleich | | 136 | 14 | | 10 |

**Patentansprüche**

1. Innenausstattungsteil für Fahrzeuge, insbesondere Autohimmel-Trägerteil, mit einer Enddicke von 1 bis 6 mm, bestehend aus einer oder drei Schichten aus Polyesterfasern, wobei die Schichten durch Druck- und Wärmeeinwirkung in die vorgesehene Form gepreßt und in sich verfestigt sowie gegebenenfalls miteinander verbunden sind, dadurch gekennzeichnet, daß alle Schichten ausschließlich aus Polyesterfasern bestehen, welche einen Titer von 1,5 bis 30 dtex aufweisen, daß zumindest jede der Hitzeeinwirkung bei bestimmungsgemäßer Verwendung ausgesetzte Faserschicht Polybutylenterephthalat-Fasern enthält, wobei, bezogen auf das jeweilige Gesamtgewicht, die einschichtige Version aus 80 bis 100 Gew.-% Polybutylenterephthalatfasern und maximal 20 Gew.-%, in homogener Verteilung, Polyesterfasern mit einem Schmelzpunkt über 228°C besteht und in der dreischichtigen Version die der Hitzeeinwirkung ausgesetzten beiden Außenschichten jeweils aus 25 bis 100 Gew.-% Polybutylenterephthalatfasern und aus maximal 75 Gew.-%, in homogener Verteilung, Polyester-Endlosfasern mit einem Schmelzpunkt über 228°C bestehen.

**2.** Innenausstattungsteil nach Anspruch 1, dadurch gekennzeichnet, daß die nicht der Hitzeeinwirkung ausgesetzte Innenschicht eine Dichte aufweist, die 8 bis 40% der Dichte der Außenschichten beträgt.

**3.** Innenausstattungsteil nach Anspruch 1 oder 2, dadurch gekennzeichnet, daß als Polybutylenterephthalat-Faser eine Kern-/Mantel-Faser vorliegt, deren Kern ein höher als der Polybutylenterephthalat-Mantelanteil schmelzender Polyester ist.

**Claims**

**1.** An interior fitting part for vehicles, in particular a car rooflining support part, having an end thickness of 1 to 6 mm, comprising one or three layers of polyester fibres, the layers being pressed into the intended shape under the effect of pressure and heat and intimately consolidated and, if appropriate, bonded to one another, characterized in that all the layers consist exclusively of polyester fibres which have a titre of 1.5 to 30 dtex, in that at least each fibre layer exposed to the effect of heat for its intended use contains polybutylene terephthalate fibres, the one-layer version consisting of, referred to the respective total weight, 80 to 100% by weight of polybutylene terephthalate fibres and at most 20% by weight, in homogenous distribution, of polyester fibres having a melting point in excess of 228°C and, in the three-layer version, the two outer layers exposed to the effect of heat respectively consisting of 25 to 100% by weight of polybutylene terephthalate fibres and of at most 75% by weight, in homogeneous distribution, of continuous polyester fibres having a melting point in excess of 228°C.

**2.** An interior fitting part according to claim 1, characterized in that the inner layer not exposed to the effect of heat has a density which is 8 to 40% of the density of the outer layers.

**3.** An interior fitting part according to either of claims 1 and 2, characterized in that, as the polybutylene terephthalate fibre, a core/sheath fibre is used, the core of which is a polyester of a higher melting point than that of the polybutylene terephthalate sheath component.

**Revendications**

**1.** Pièce de garniture pour véhicules, en particulier pièce de support pour habillage de plafond de voiture, ayant une épaisseur finale comprise entre 1 et 6 mm, comportant une ou trois couches en fibres de polyester, les couches étant pressées par compression et par chaleur dans le moule prévu, consolidées et le cas échéant reliées entre elles, caractérisée en ce que l'ensemble des couches sont exclusivement en fibres de polyester possédant un titre de 1,5 à 30 dtex, et en ce qu'au moins chaque couche de fibres exposée à l'action de la chaleur en cas d'utilisation appropriée comporte des fibres de polybutylènetéréphtalate, étant précisé que par rapport au poids total respectif, la version à une couche comporte 80 à 100 % en poids de fibres de polybutylènetéréphtalate, et au maximum 20 % en poids, en répartition homogène, de fibres de polyester ayant un point de fusion supérieur à 228°C, et dans la version à trois couches, les deux couches extérieures exposées à l'action de la chaleur comportent chacune 25 à 100 % en poids de fibres de polybutylènetéréphtalate et au maximum 75 % en poids, en répartition homogène, de fils continus de polyester ayant un point de fusion supérieur à 228°C.

**2.** Pièce de garniture intérieure selon la revendication 1, caractérisée en ce que la couche intérieure non exposée à l'action de la chaleur a une masse volumique qui représente 8 à 40 % de la masse volumique des couches extérieures.

**3.** Pièce de garniture intérieure selon la revendication 1 ou 2, caractérisée en ce que la fibre de polybutylènetéréphtalate se présente sous forme d'une fibre à coeur et gaine dont le coeur est un polyester ayant un point de fusion plus élevé que la part de l'enveloppe au polybutylènetéréphtalate.